# EUROPÄISCHE PATENTANMELDUNG

(11) **EP 1 671 762 A1**
(43) Veröffentlichungstag der Anmeldung: **21.06.2006**
(21) Anmeldenummer: 05027560.1
(22) Anmeldetag: 16.12.2005
(51) Int. Cl.: B26D 7/18, B08B 5/02, B23Q 11/00

(54) **Vorrichtung zur Entfernung von Bearbeitungsstaub, insbesondere Schnittstaub**

(30) Priorität: 17.12.2004 DE 102004060849
(71) Anmelder: Hildebrand Systeme GmbH, 79689 Maulburg (DE); Hildebrand Systeme GmbH, CH-6300 Zug (CH)
(72) Erfinder: Trimborn, Christian, 79650 Schopfheim (DE)
(74) Vertreter: Ebert, Jutta

(57) **Zusammenfassung**

Bei einer Vorrichtung zur Entfernung von beim Bearbeiten von Materialien, insbesondere beim Schneiden von Materialbahnen, entstehendem Bearbeitungs- oder Schnittstaub mit einer die Bearbeitungs- oder Schneidstelle abdeckenden Schutzhaube (3),
ist im Abstand zur Bearbeitungs- bzw. Schneidstelle in die Schutzhaube (3) ein durch sie hindurchführender Strömungskanal (4) eingebaut, der im Bereich der Bearbeitungs- bzw. Schneidstelle auf seiner dem zu bearbeitenden bzw. zu schneidenden Gegenstand bzw. der Materialbahn zugewandten Seite eine Öffnung (6) aufweist und durch den Luft mit hoher Strömungsgeschwindigkeit hindurchgeführt wird. Durch den mit hoher Geschwindigkeit durch den Strömungskanal hindurchgehenden Luftstrom wird anfallender Bearbeitungs- bzw. Schnittstaub durch die Öffnung (6) hindurch mitgerissen und abtransportiert, also direkt am Entstehungsort entfernt. Reinigungsarbeiten und Stillstandzeiten an der Maschine werden vermieden, die Leistung de Maschine wird erhöht (Fig. 1).

## Beschreibung

Die Erfindung bezieht sich auf eine Vorrichtung zur Entfernung von beim Bearbeiten, insbesondere Schneiden von bewegten Materialbahnen entstehendem Bearbeitungsstaub oder Schnittstaub mit einer die Bearbeitungs- oder Schneidstelle abdeckenden Schutzhaube.

In der Druckindustrie erfolgt der Druck auf langen Materialbahnen, vorzugsweise Papierbahnen, die nach dem Druckvorgang z.B. in Prospektgröße oder Zeitungsformat usw. geschnitten werden müssen. Um den Gesamtvorgang effizienter zu machen, d.h. um pro Zeiteinheit mehr bedruckte und geschnittene Einzeleinheiten zu erhalten, werden die Material- bzw. Papierbahnen immer breiter. Die Bahnen müssen deshalb nach dem Druck zunächst, und zunehmend mehrfach, in Längsrichtung und dann in Querrichtung geschnitten werden. Der Schnitt in Längsrichtung erfolgt dabei an der in Längsrichtung bewegten Materialbahn mittels eines oder mehrerer zueinander parallel angeordneter und sich entgegen der Bewegungsrichtung der Materialbahn drehender, kreisrunder Schneidmesser(s), die in die Förderbahn hineinragen. In erster Linie um Unfälle zu vermeiden, sind die Schnittstelle und die Schneidmesser von einer Schutzhaube abgedeckt, die vorzugsweise aus zwei Halbschalen besteht. Beim Schneiden der Materialbahn entsteht sogenannter Schnittstaub in so großen Mengen, dass regelmäßig und in kurzen Zeitabständen die Messer und Vorrichtungen um die Messer, wie die Messerhalter usw., gründlich gereinigt werden müssen und damit der eigentliche Arbeitsvorgang unterbrochen, die Maschine zum Stillstand gebracht werden muss; die Arbeitseffizienz wird dadurch stark herabsetzt. Die Menge des anfallenden Schnittstaubs ist umso größer je langfaseriger das bedruckte Material ist; so hat sich das Problem noch verschärft, seit immer häufiger langfaseriges Papier, wie Recyclingpapier, zum Einsatz kommt. Um dem Problem zu begegnen, wurde an einer recht beliebig gewählten Stelle der Schutzhaube, oben oder seitlich, ein Absaugstutzen angebracht, an dem eine Saugvorrichtung angeschlossen werden kann, mit deren Hilfe der Schnittstaub von dem oder den Schneidmessern weg und zu einer Filtervorrichtung transportiert werden soll. Diese Vorrichtung hat sich aber als wenig effizient erwiesen. Unter der Schutzhaube und um die Schneidmesser entsteht dabei kein eigentlicher Luftstrom sondern lediglich ein gewisser Unterdruck, der den Schnittstaub nur unzureichend und nicht gezielt entfernen kann, ihn eher aufwirbelt, so dass zwar ein Teil durch den Absaugstutzen abgesaugt wird, ein anderer Teil aber wieder absinkt und sich wie Schnee auf die Maschine legen kann. Als weiterer Nachteil kommt hinzu, dass nicht nur der Schnittstaub sondern auch die Materialbahn, z.B. das Papier, angesaugt wird und sich so aus der Förderbahn heben kann, was den Arbeitsablauf behindert.

Durch die DE 200 11 320 U1 ist eine Vorrichtung zum Längsteilen von Materialbahnen bekannt, die einen Messerkopf mit einem rotierbar gelagerten Kreismesser aufweist. Der Messerkopf wird allseitig von einer Schutzhaube umschlossen, die nur im Schneidenbereich eine Öffnung aufweist, durch die in Schneidposition des Kreismessers lediglich dessen Schneidbereich herausragt. Es handelt sich hier um ein transportables Handgerät, und die Schutzhaube ist als reiner Handschutz vorgesehen, der vor allem bei Einstellarbeiten am Gerät den Kontakt mit dem Kreismesser ausschließen soll.

Durch die EP 0 887 160 A2 ist eine Absaugvorrichtung bekannt zum Entfernen von Staub der beim Schneiden von Papier, Pappe und dergleichen entsteht. Die Papierbahn läuft zwischen zwei gegeneinander rotierenden Schneidmessern hindurch. In Bewegungsrichtung nach den Schneidmessern öffnen sich seitlich über und unter der Papierbahn und einander gegenüberstehend zwei Saugrohre, die an Saugvorrichtungen angeschlossen sind und durch die anfallender Scheidstaub gezielt nur an dieser Stelle abgesaugt wird, nicht aber der Staubanteil, der etwa durch die Bewegung der Materialbahn mitgenommen wird. Auch sich seitlich der Schneidmesser ausbreitender Bearbeitungsstaub wird nicht oder nur unzureichend erfasst. Die Absaugstelle ist nicht nach außen abgeschirmt, so dass immer noch Staub in die Umgebung gelangen kann. Die Anordnung von zwei separaten Saugvorrichtungen ist aufwendig und kostenintensiv.

Mit der DE 88 15 327 U1 wird eine Schutzhaube für tragbare Maschinen, wie Handkreissägen, Handschleifmaschinen und dergl. vorgeschlagen, in die entlang der oberen Schutzhaubenwandung ein Staubabfuhrkanal integriert ist, der an der Spitze de Schutzhaube beginnt und im hinteren Abschnitt der Schutzhaube in einen Absaugstutzen übergeht. Auch mit dieser Vorrichtung wird Bearbeitungsstaub nur gezielt direkt vor der Bearbeitungsstelle, d.h. in diesem Fall z.B. vor einem Sägeblatt oder einer Schleifscheibe, abgesaugt und abtransportiert. Für die Bearbeitung an einem feststehenden Gegenstand kann dies ausreichend sein, beim Schneiden an einer bewegten Materialbahn, wird von dieser immer auch Bearbeitungsstaub mitgerissen werden, der mit einer solchen Vorrichtung nicht erfasst werden kann, sondern in die Umgebung gelangt.

Die US 5 774 992 A beschreibt eine Vorrichtung für eine Handkreissäge, bei der zwei übereinander angeordnete Platten eine Kammer oder mehrere untereinander in Verbindung stehende Kammern einschließen, die mit Schlauchanschlüssen einer Absaugvorrichtung in Verbindung stehen. In den Platten sind zwei übereinander liegende Schlitze vorgesehen, durch die das Sägeblatt einer auf der oberen Platte montierten Kreissäge hindurchragt. Die untere Platte bietet eine Gleitfläche, mit der die Säge über ein Werkstück bewegt werden kann. Bearbeitungsstaub soll sich in den von den Platten gebildeten Kammern sammeln und durch die Schlauchanschlüsse abgesaugt werden.

Aufgabe der Erfindung ist es, eine Vorrichtung zu schaffen, mit der Bearbeitungsstaub, insbesondere der beim Schneiden bewegter Materialbahnen entstehende Schnittstaub, hochwirksam und möglichst vollständig von der Bearbeitungs- oder Schneidstelle und aus der Maschine abtransportiert werden kann, so dass die Maschine über einen längeren Zeitraum weitgehendst staubfrei bleibt, Wartungs- und Säuberungsarbeiten nicht oder wenigstens in deutlich längeren Zeitabständen notwendig werden.

Diese Aufgabe wird durch die Merkmale des Anspruchs 1 gelöst.

Bei einer Vorrichtung zur Entfernung von beim Schneiden von bewegten Materialbahnen, z.B. bedruckten Papierbahnen, entstehendem Schnittstaub in der die Schneidstelle abdeckenden Schutzhaube in einem geringen, die Bewegung der Materialbahn nicht behindernden Abstand zu dieser Materialbahn ein in Bewegungsrichtung der Materialbahn verlaufender Strömungskanal in die Schutzhaube eingebaut ist, der im Bereich der Schneidstelle auf seiner der Materialbahn zugewandten Seite eine Öffnung aufweist und durch den Luft mit hoher Strömungsgeschwindigkeit hindurchgeführt wird. Der entstehende Schnittstaub wird damit unmittelbar am Ort der Entstehung abgesaugt und entfernt, und zwar nicht nur punktuell an der Schneidstelle selbst, sondern auch von der bewegten Materialbahn mitgenommener Staub wird entfernt. Es wird vermieden, dass Schnittstaub an der Materialbahn anhaftet oder aufgewirbelt wird und sich auf die Maschine absenkt. Damit werden Reinigungsarbeiten und dadurch bedingte Stillstandzeiten der Maschine vermieden. Andere Wartungsarbeiten, wie z.B. das Austauschen stumpf gewordener Schneidmesser, sind nur in längeren Zeitabständen vorzunehmen. Der Produktausstoß pro Zeiteinheit wird somit deutlich erhöht.

Um das Absaugen des Bearbeitungs- oder Schnittstaubs möglichst effektiv zu machen, deckt die Öffnung auf der dem zu bearbeitenden oder zu schneidenden Gegenstand zugewandten Seite des Strömungskanals den gesamten Bereich der Bearbeitungs- oder Scheidstelle ab.

Wenn der Strömungskanal in seinem über der Bearbeitungs- oder Schneidstelle liegenden Abschnitt gegenüber seiner Eintrittsöffnung und seiner Austrittsöffnung an der Schutzhaube verengt ist, erhöht sich die Strömungsgeschwindigkeit der hindurchgeführten Luft zusätzlich, und der anfallende Staub wird noch wirkungsvoller mitgerissen.

Der Strömungskanal kann vorteilhaft aus zwei Halbschalen bestehen. Das erleichtert den Zugang bei noch erforderlichen Wartungsarbeiten, wie z.B. beim Austausch stumpf gewordener Schneidmesser bzw. sonstigen Bearbeitungswerkzeugs.

Bei einer Vorrichtung für eine Maschine zum Schneiden bewegter Materialbahnen weist der Strömungskanal auf seiner der Materialbahn abgewandten Seite einen engen Längsschlitz für den Durchgriff eines sich drehenden, kreisrunden Schneidmessers auf und die Länge der der Materialbahn zugewandten Öffnung des Strömungskanals ist ebenfalls dem Durchgriff des Scheidmessers entsprechend bemessen.

Die Austrittsöffnung des Strömungskanals kann mit einer Filtervorrichtung verbunden sein, um zu vermeiden, dass der abgesaugte Staub unkontrolliert in die Umgebung abgegeben wird.

An der Eintrittsöffnung des Strömungskanals kann eine Entladungsvorrichtung angeordnet sein, die mögliche elektrostatische Aufladungen, insbesondere an einer bewegten Materialbahn, neutralisiert und somit einem Anhaften von Staub an der Materialbahn entgegenwirkt.

Wenn sich die Schneidvorrichtung samt dem Strömungskanal auf der einen Seite der Materialbahn befindet, kann auf der anderen Seite der Materialbahn zusätzlich eine Hochleistungs-Absaugdüse angeordnet werden, deren Düsenöffnung sich nach der Schneidstelle in unmittelbarer Nähe zur Materialbahn öffnet. Am Düseneingang können hohe Strömungsgeschwindigkeiten erzeugt werden, so dass auch eventuell an der Unterseite der Materialbahn anhaftender Schnittstaub wirkungsvoll entfernt werden kann.

Die Erfindung wird im Folgenden anhand der anhängenden Zeichnung beispielhaft genauer beschrieben; es zeigen
- Fig. 1: einen Längsschnitt durch eine Ausführungsform der Erfindung,
- Fig. 2: einen Schnitt durch die Vorrichtung entlang der Linie A - B in Fig. 1,
- Fig. 3: die Ansicht der Vorrichtung gemäß Fig. 1 in Richtung des Pfeiles P in Fig. 1 und
- Fig. 4: einen Längsschnitt durch eine zweite Ausführungsform der Erfindung.

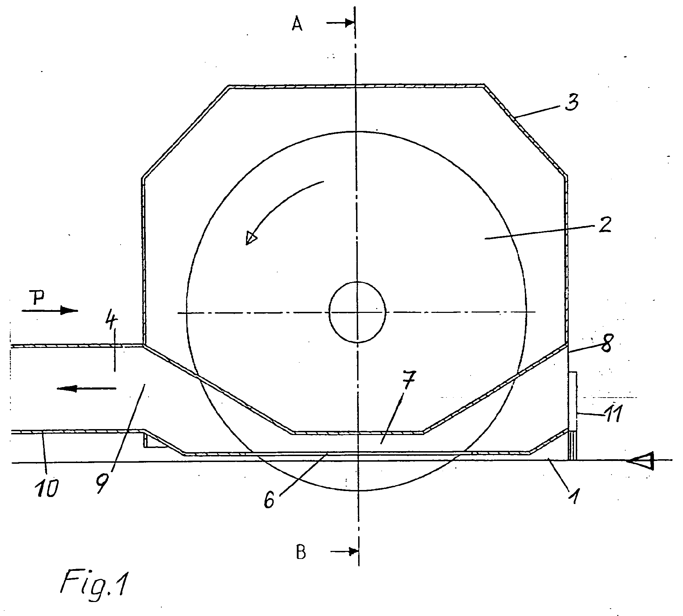

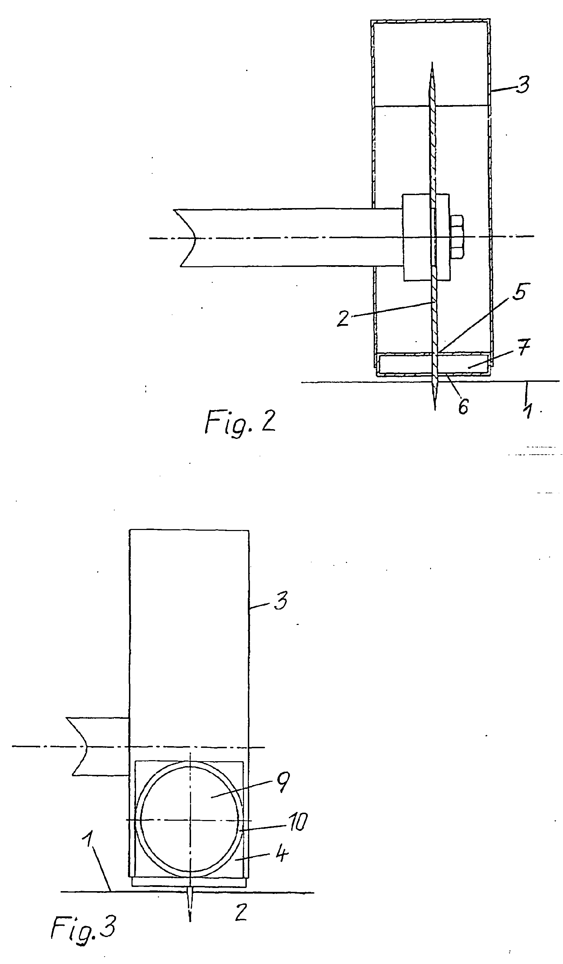

Fig. 1 zeigt die Vorrichtung an einer in Pfeil- d.h. Längsrichtung bewegten Materialbahn 1, z.B. an einer bedruckten Papierbahn 1, die während ihrer Bewegung durch ein sich entgegen der Bewegungsrichtung drehendes, kreisrundes Schneidmesser 2 in Längsrichtung geschnitten wird. Das Schneidmesser 2 und die Schnittstelle an der Materialbahn 1 sind in bekannter Weise durch eine Schutzhaube 3 abgedeckt. In der Schutzhaube 3 ist ein in der Bewegungsrichtung der Materialbahn 1 verlaufender Strömungskanal 4 installiert, der zur Materialbahn 1 nur einen so geringen Abstand hält, dass deren Bewegung nicht behindert werden kann. In der Wand des Strömungskanals 4 ist auf seiner von der Materialbahn 1 abgewandten Seite ein enger Längsschlitz 5 und auf seiner der Materialbahn 1 zugewandten Seite eine Öffnung 6 vorgesehen (siehe auch Fig. 2), durch die das Schneidmesser 2 in die Bewegungsbahn der Materialbahn 1 ragt. Dabei ist die Öffnung 6 so bemessen, dass durch sie die gesamte Schneidstelle abgedeckt wird; durch sie wird der während des Schneidvorgangs anfallende Schnittstaub abgesaugt, indem durch den Strömungskanal 4 ein Luftstrom mit hoher Strömungsgeschwindigkeit gezielt am Schneidmesser 2 vorbei und entlang der Oberfläche der Materialbahn 1 geführt wird. Vorzugsweise ist der Strömungskanal 4 im Abschnitt 7 über der Schneidstelle gegenüber seiner Eintrittsöffnung 8 und seiner Austrittsöffnung 9 an der Schutzhaube 3 verengt, wodurch sich die Strömungsgeschwindigkeit der hindurchgeführten Luft noch erhöht, die Wirkung noch verbessert wird. Der beim Schneidvorgang entstehende Schnittstaub wird von dem Luftstrom durch die Öffnung 6 hindurch mitgerissen und durch den Strömungskanal 4 in Pfeilrichtung abtransportiert. An die Austrittsöffnung 9 bzw. den Austrittsstutzen 10 kann eine in der Zeichnung nicht dargestellte Filtervorrichtung angeschlossen sein, die den Schnittstaub zurückhält und verhindert, dass er unkontrolliert in die Umgebung abgegeben wird.

So wird auf vorteilhafte Weise der Schnittstaub unmittelbar am Entstehungsort und sehr wirksam entfernt; der Staub wird nicht in der Schutzhaube 3 aufgewirbelt und kann also auch nicht wieder auf die Schneidstelle und das Materialband 1 und Teile der Maschine absinken, denn er kann innerhalb der Vorrichtung nicht aus dem Strömungskanal 4 austreten. Damit werden aufgrund von Staubablagerungen notwendige Reinigungs- und Wartungsarbeiten und dadurch bedingte Stillstandzeiten der Maschine vermieden. Die Maschine kann effizienter arbeiten, der Produktausstoß pro Zeiteinheit wird deutlich erhöht. Der im Strömungskanal 4 entstehende Unterdruck wirkt sich nicht nachteilig auf die Materialbahn 1 aus und kann sie nicht ansaugen, da der Strömungskanal 4 nur durch die Öffnung 6 zur Materialbahn 1 hin offen ist.

An der Eintrittsöffnung 8 des Strömungskanals 4 kann vorteilhaft eine Entladungsvorrichtung 11 angeordnet sein, mit der eventuelle elektrostatische Aufladungen an der Materialbahn 1 vor dem Schneid- bzw. Absaugvorgang neutralisiert werden. Somit werden zusätzliche Anhaftungen aufgrund elektrostatischer Kräfte nach dem Schneidvorgang vermieden.

Der Strömungskanal 4 kann vorteilhaft aus zwei Halbschalen (nicht dargestellt) bestehen, wodurch der Zugang bei noch verbleibenden Wartungsarbeiten, wie z.B. dem Austausch stumpf gewordener Schneidmesser, erleichtert wird.

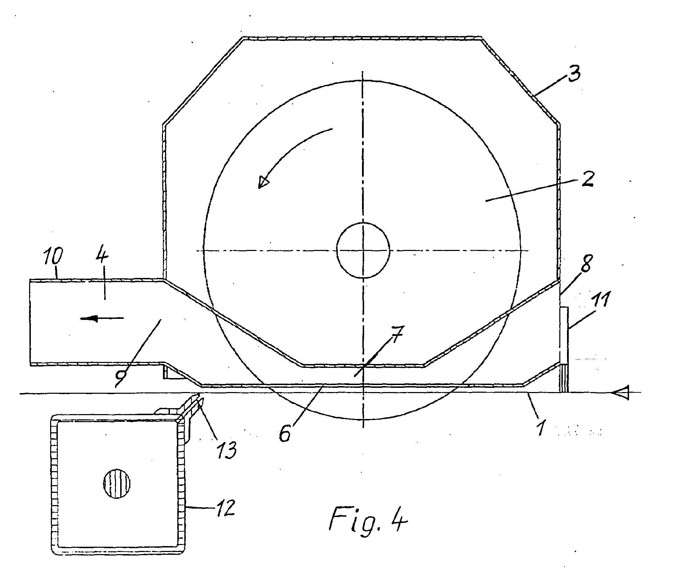

Fig. 4 zeigt eine weiterentwickelte Ausführungsform der Erfindung, und zwar ist bei einer Vorrichtung gemäß Fig. 1 mit einer auf einer Seite der Materialbahn 1 angeordneten Scheidvorrichtung auf der anderen Seite der Materialbahn 1 zusätzlich eine Hochleistungs-Absaugdüse 12 angeordnet, um an dieser Materialbahnseite eventuell noch anhaftenden, restlichen Schnittstaub abzusaugen. Diese Absaugdüse 12 hat ein besonderes Düsenprofil, welches sehr hohe Strömungsgeschwindigkeiten an der Düsenöffnung 13 erzeugt. Diese öffnet sich nach der Schneidstelle in unmittelbarer Nähe zur Materialbahn 1.

Die Erfindung wurde am Beispiel einer Schneidvorrichtung mit einem einzigen Schneidmesser an einer bewegten Materialbahn beschrieben. Wie eingangs bereits erwähnt, können insbesondere bei breiteren Materialbahnen, die mehrfach in Längsrichtung zu schneiden sind, auch mehrere Schneidmesser parallel zueinander angeordnet sein, oder sie können beidseitig der Materialbahn, d.h. oberhalb und unterhalb der Materialbahn, angeordnet sein. Auch in solchen Fällen ist die Erfindung ohne weiteres anwendbar.

Auch soll die Erfindung nicht auf die Anwendung bei bewegten Materialbahnen beschränkt sein. Sie ist vielmehr auch bei anderen Bearbeitungsvorgängen, bei denen Bearbeitungsstaub oder kleine Materialpartikel anfallen, entsprechend einsetzbar.

### Bezugszeichenliste:

- 1: Materialbahn
- 2: Schneidmesser
- 3: Schutzhaube
- 4: Strömungskanal
- 5: Längsschlitz
- 6: Öffnung
- 7: verengter Abschnitt
- 8: Eintrittsöffnung
- 9: Austrittsöffnung
- 10: Austrittsstutzen
- 11: Entladungsvorrichtung
- 12: Absaugdüse
- 13: Düsenöffnung

## Patentansprüche

1. Vorrichtung zur Entfernung von beim Bearbeiten, insbesondere Schneiden von bewegten Materialbahnen entstehendem Bearbeitungsstaub oder Schnittstaub mit einer die Bearbeitungs- oder Schneidstelle abdeckenden Schutzhaube,
**dadurch gekennzeichnet, dass** in einem geringen, die Bewegung der Materialbahn (1) nicht behindernden Abstand zur Materialbahn (1) ein in Bewegungsrichtung der Materialbahn (1) verlaufender Strömungskanal (4) in die Schutzhaube (3) eingebaut ist, der im Bereich der Schneidstelle auf seiner der Materialbahn (1) zugewandten Seite eine Öffnung (6) aufweist und durch den Luft mit hoher Strömungsgeschwindigkeit hindurchgeführt wird.

2. Vorrichtung nach Anspruch 1, dass die Öffnung (6) den gesamten Bereich der Bearbeitungs- oder Schneidstelle abdeckt.

3. Vorrichtung nach Anspruch 1, **dadurch gekennzeichnet, dass** der Strömungskanal (4) in seinem über der Bearbeitungs- oder Schneidstelle liegenden Abschnitt (7) gegenüber seiner Eintrittsöffnung (8) und seiner Austrittsöffnung (9) an der Schutzhaube (3) verengt ist.

4. Vorrichtung nach Anspruch 1, **dadurch gekennzeichnet, dass** der Strömungskanal (4) aus zwei Halbschalen besteht.

5. Vorrichtung nach Anspruch 1, **dadurch gekennzeichnet, dass** der Strömungskanal (4) auf seiner der Materialbahn (1) abgewandten Seite einen engen Längsschlitz (5) aufweist für den Durchgriff eines sich drehenden, kreisrunden Schneidmessers(2) und dass die Länge der der Materialbahn (1) zugewandten Öffnung (6) ebenfalls dem Durchgriff des Scheidmessers (2) entsprechend bemessen ist.

6. Vorrichtung nach Anspruch 1, **dadurch gekennzeichnet, dass** die Austrittsöffnung (9) des Strömungskanals (4) mit einer Filtervorrichtung verbunden ist.

7. Vorrichtung nach Anspruch 1, **dadurch gekennzeichnet, dass** an der Eintrittsöffnung (8) des Strömungskanals (4) eine Entladungsvorrichtung (11) angeordnet ist zur Neutralisierung elektrostatischer Aufladungen an der Materialbahn (1).

8. Vorrichtung nach Anspruch 1, **dadurch gekennzeichnet, dass** sich die Schneidvorrichtung samt dem Strömungskanal (4) auf der einen Seite der Materialbahn (1) befindet und auf der anderen Seite der Materialbahn (1) eine Hochleistungs-Absaugdüse (12) angeordnet ist, deren Düsenöffnung (13) sich nach der Schneidstelle in unmittelbarer Nähe zur Materialbahn (1) öffnet.
